# EUROPÄISCHE PATENTSCHRIFT

(11) **EP 1 051 797 B1**
(45) Veröffentlichungstag und Bekanntmachung des Hinweises auf die Patenterteilung: **05.11.2003**
(21) Anmeldenummer: 99901501.9
(22) Anmeldetag: 29.01.1999
(51) Int. Cl.: H02K 16/02, H02K 16/00, H02K 51/00

(54) **ELEKTRISCHE MASCHINE**
ELECTRIC MACHINE
MACHINE ELECTRIQUE

(30) Priorität: 30.01.1998 AT 18898
(43) Veröffentlichungstag der Anmeldung: 15.11.2000
(73) Patentinhaber: Schrödl, Manfred, 7223 Sieggraben (AT)
(72) Erfinder: Schrödl, Manfred, 7223 Sieggraben (AT)
(74) Vertreter: Krause, Peter
(86) Internationale Anmeldenummer: AT9900024
(87) Internationale Veröffentlichungsnummer: WO99039426

(56) Entgegenhaltungen:
- EP-A- 0 798 844
- EP-A- 0 817 359
- WO-A-92/01532
- WO-A-92/18346
- WO-A-97/23940
- DE-A- 3 313 768
- DE-C- 711 928
- FR-A- 2 390 847
- GB-A- 2 022 325
- GB-A- 2 278 242
- US-A- 5 675 203
- PATENT ABSTRACTS OF JAPAN vol. 009, no. 181 (E-331), 26. Juli 1985 & JP 60 051426 A (MATSUSHITA DENKI SANGYO KK), 22. März 1985
- PATENT ABSTRACTS OF JAPAN vol. 008, no. 231 (E-274), 24. Oktober 1984 & JP 59 113750 A (MATSUSHITA DENKI SANGYO KK), 30. Juni 1984
- PATENT ABSTRACTS OF JAPAN vol. 009, no. 240 (E-345), 26. September 1985 & JP 60 091847 A (MITSUBISHI DENKI KK), 23. Mai 1985

## Beschreibung

Die Erfindung betrifft eine elektrische Maschine in Drehstromausführung, die in einem Gehäuse einen Stator mit mindestens einer Statorwicklung und mindestens zwei, mechanisch voneinander getrennte, Rotoren aufweist, wobei die Rotoren die gleiche Rotationsachse aufweisen und jeder Rotor mit dem elektromagnetisch aktiven Stator in elektromagnetischer Wechselwirkung steht, wobei die Drehzahlen der Rotoren gleich oder unterschiedlich sind.

Es ist bekannt, zur elektromechanischen Energiewandlung Drehstrommaschinen vorteilhaft einzusetzen. Diese weisen einen Stator mit einem Drehstromwicklungssystem auf, das von elektrischem Strom durchflossen wird und in Wechselwirkung mit einem Magnetfeld, das entweder durch Dauermagnete, durch Erregerwicklungen, im Fall von Synchronmaschinen, oder durch die Statorwicklung selbst, bei Asynchron- und Reluktanzmaschinen oder durch Kombinationen dieser Möglichkeiten erzeugt wird.

Bei bekannten elektromechanischen Antrieben oder rein mechanischen Antrieben, wie beispielsweise Getriebe, bei denen zwei verschiedene, vorzugsweise unabhängige Drehzahlen benötigt werden, ist die Herstellung sehr aufwendig.

Aus der EP-A-798844 ist eine elektrische Maschine in Drehstromausführung bekannt, die in einem Gehäuse einen Stator mit mindestens einer Statorwicklung und mindestens zwei, mechanisch voneinander getrennte, Rotoren aufweist. Die Rotoren weisen die gleiche Rotationsachse auf und jeder Rotor steht mit dem elektromagnetisch aktiven Stator in elektromagnetischer Wechselwirkung, wobei die Drehzahlen der Rotoren gleich oder unterschiedlich sind.

Weiters sind auch aus der WO-A-9218346, der DE-A-3313768 und der GB-A-2278242 elektrische Maschinen bekannt, die in einem Gehäuse einen Stator mit mindestens einer Wicklung und mindestens zwei Rotoren aufweisen.

Aus der D3 WO-A-9201532 ist ein Hauptspindelantrieb für eine Werkzeugmaschine bekannt, der mehrere einstellbare Drehzahlen aufweist. Bei diesem Antrieb werden zwei gleichachsig hintereinander angeordnete Elektromotoren vorgesehen, wobei jeder Elektromotor mit einem eine Phasenanschnittssteuerung aufweisenden Vorschaltgerät für die Einstellung der kontinuierlich veränderbaren Drehzahl versehen ist. Jedes Vorschaltgerät wirkt nur auf einen Elektromotor.

Abschließend ist noch aus der EP-A-817359 ein Elektromotor bekannt, der einen Stator und zwei auf einer Achse liegende Rotoren aufweist und der als Fahrzeugantrieb einsetzbar ist.

Aufgabe der Erfindung ist es, eine elektrische Maschine zu schaffen, die die oben aufgezeigten Nachteile vermeidet und mit der zwei verschiedene, vorzugsweise unabhängige Drehzahlen realisiert werden können, wie sie beispielsweise bei Antrieben von Kraftfahrzeugen oder bei Kolbenmaschinen benötigt werden.

Die Erfindung ist dadurch gekennzeichnet, daß die Anspeisung der Statorwicklung mit einer über eine von der Motorsteuerung gesteuerte Superposition aus mindestens zwei frequenzmäßig verschiedenen Drehfeldanteilen, je ein Drehfeldanteil je Rotor, erfolgt.

Mit der Erfindung ist es erstmals möglich, ein elektrisches Antriebssystem zu schaffen, das wirtschaftlich hergestellt und eingesetzt werden kann. Der überraschende Vorteil ist dadurch gegeben, daß die Steuerung von zwei auf unterschiedliche Drehzahlen laufende, elektrisch versorgte, Rotoren mit möglichst einfacher Hardware und vorzugsweise mit einer Statorwicklung und nur einer anspeisenden Leistungselektronik, möglich ist. Vor allem ist es vorteilhaft, daß gegenüber den bekannten Lösungen etwa die Hälfte an elektrischen Komponenten und Wicklungsaufwand notwendig ist.

Vorteilhaft bei dieser Erfindung ist es weiters, daß gegenüber bekannten elektromechanischen Antrieben oder rein mechanischen Antrieben, wie Getrieben, bei denen zwei verschiedene, vorzugsweise unabhängige Drehzahlen benötigt werden, wesentliche Teile, wie beispielsweise das Statorblechpaket, Gehäuseelemente, Teile der Steuerung eingespart werden können. Das erfindungsgemäße Antriebssystem kann beispielsweise bei Pumpen-/Lüfterkombinationen wie bei Ölbrenner-Antrieben oder Kühlaggregaten, Motor-/Motorlüfterkombinationen, oder als Antrieb mit Differentialwellen mit zwei mechanischen Ausgängen eingesetzt werden. Es können auch, vorteilhaft mechanische Getriebe variabler Übersetzung auf elektrischem Weg realisiert werden, bei denen außerdem elektrische Energie aus der mechanischelektrisch-mechanischen Wandlerstufe ein- oder ausgekoppelt werden kann. Beispielsweise kann auf diese Weise ein Antrieb für ein Kraftfahrzeug mit Getriebefunktion, Kupplungsfunktion, Starterfunktion und integrierter Stromerzeugung realisiert werden. Es können auch Rüttelmomente auf einer Getriebeseite, wie sie zum Beispiel bei Kolbenmaschinen entstehen, über die elektrische Zwischenstufe durch periodische elektrische Leistungszu- und -abfuhr kompensiert werden.

Gemäß einem besonderen Merkmal der Erfindung ist mindestens eine Wicklung des Stators als Nut- oder Luftspaltwicklung ausgeführt. Vorteilhaft dabei ist, daß diese Wicklungen rationell hergestellt werden können.

Nach einer weiteren Ausgestaltung der Erfindung ist mindestens ein Rotor als Innenläufer und / oder mindestens ein Rotor als Außenläufer ausgeführt. Durch diese Ausgestaltung ist eine kompakte Ausführung der Maschine möglich.

Gemäß einem weiteren Merkmal der Erfindung sind die Rotoren und der Stator nach dem Prinzip eines Scheibenläufers aufgebaut. Dabei befinden sich die zwei Wicklungen als Nut- oder Luftspaltwicklung an der linken und an der rechten Seite des als Scheibentyp aufgebauten Stators. Die Rotoren sind entsprechend ebenfalls als Scheibenläufer mit Permanentmagneterregung, Käfigläufer, Reluktanzaufbau, etc. zur linken und zur rechten Seite des Stators angeordnet. Die beiden Statorwicklungssysteme werden wiederum von im allgemeinen unterschiedlichen Spannungsquellen gespeist.

Nach einer besonderen Ausgestaltung der Erfindung weist der Stator eine Wicklung auf, wobei diese Wicklung ein magnetisches Feld mit mindestens zwei ausgeprägten Drehfrequenzanteilen erzeugt, die selektiv mit den Rotoren in elektromagnetische Wechselwirkung treten. Der Vorteil dieser Ausgestaltung liegt darin, daß eine Wicklung samt dazugehöriger Anspeisung, vorzugsweise ein Umrichter, eingespart wird und die beiden Frequenzanteile bereits auf der Signalseite durch die zwei Teilmotorsteuerungen bzw. Regelungen überlagert sind und mit einem gemeinsamen Leistungsteil über die Ansteuerung eingespeist wird. Dieser Vorteil wird durch erhöhte Verluste und Rüttelmomente erkauft, die aber oft gegenüber der Verbilligung des Antriebs in Kauf genommen werden können.

Gemäß einem weiteren Merkmal der Erfindung beziehen oder geben die Wicklungen des Stators über leistungselektronische Stellglieder, wie beispielsweise Transistor-, GTO-Umrichter, Diodengleichrichter o. dgl. die elektrische Energie ab. Von Vorteil dabei ist, daß mit dem heutigen Standard dieser Technologie eine einwandfreie Funktion gewährleistet ist.

Nach einer weiteren Ausgestaltung der Erfindung sind mindestens zwei Rotoren über mindestens zwei Wicklungen und ein leistungselektronisches Stellglied als elektrisches Getriebe verkoppelt. Die Ausführung der Doppel- bzw. Multirotormaschine als Getriebe bietet die Möglichkeit einer stufenlosen Drehzahlübersetzung mit einfacher Steuerbarkeit über eine elektrische Zwischenstufe. Weiters stellt sie bei Bedarf eine Kupplungsfunktion zur Verfügung, wobei ausgekuppelt ist, wenn ein Leistungsteil nicht freigegeben wird.

Gemäß einer weiteren Ausgestaltung der Erfindung ist über die elektrische Getriebe-Zwischenstufe elektrische Energie mit einem elektrischen System austauschbar. Vorteilhaft dabei ist, daß zusätzlich aus dem elektrischen Zwischenkreis Leistung entnommen werden kann, um eine elektrische Energieversorgung zu realisieren. Weiters kann durch elektrische Energiezufuhr vorübergehende oder dauernde erhöhte mechanische Leistung am Getriebeausgang zur Verfügung gestellt werden.

Nach einem weiteren Merkmal der Erfindung sind die Rotoren als Differentialgetriebe ausgeführt. Vorteilhafterweise kann durch vorzugsweise elektrische Energiezufuhr und beidseitige mechanische Energieabfuhr eine Differentialgetriebefunktion realisiert werden..

Gemäß einer weiteren Ausgestaltung der Erfindung sind ein gemeinsames leistungselektronisches Eingangsmodul und eine der Anzahl der Wicklungen entsprechende Anzahl von leistungselektronischen Ausgangsmodulen vorgesehen, deren Steuerung von der Motorsteuerung erfolgt. Dadurch können Drehmomentschwankungen an einem mechanischen Eingang des Getriebes durch elektrische Energiezu- und -abfuhr kompensiert werden oder auch willkürlich erzeugt werden, beispielsweise bei einer Rüttel- oder Losbrechfunktion.

Nach einem weiteren Merkmal der Erfindung erfolgt eine Startprozedur der Rotoren drehzahlmäßig selektiv. Die beiden Rotoren der Doppelrotormaschine treten selektiv mit frequenzmäßig verschiedenen Drehfeldanteilen des Drehfeldes in Wechselwirkung und laufen daher mit entsprechend im allgemeinen verschiedenen Drehzahlen. Die Selektion der Frequenzen erfolgt beispielsweise durch unterschiedliche Trägheitsmomente, zeitabhängig lösbare Bremsen, oder unterschiedliche Rotortypen.

Die Erfindung wird an Hand von Ausführungsbeispielen, die in der Zeichnung dargestellt sind, näher erläutert.

Die
Fig. 1 zeigt eine Doppelrotormaschine, wobei der Stator zwei unabhängige Wicklungen aufweist,
Fig. 2 die dazugehörige Steuerung,
Fig. 3 eine Scheibenläuferanordnung,
Fig. 4 eine Doppelrotormaschine mit einer Wicklung und
Fig. 5 ein Getriebe mit variablem Drehzahlverhältnis und optionaler elektrischer Energie Ein- und Auskopplung.

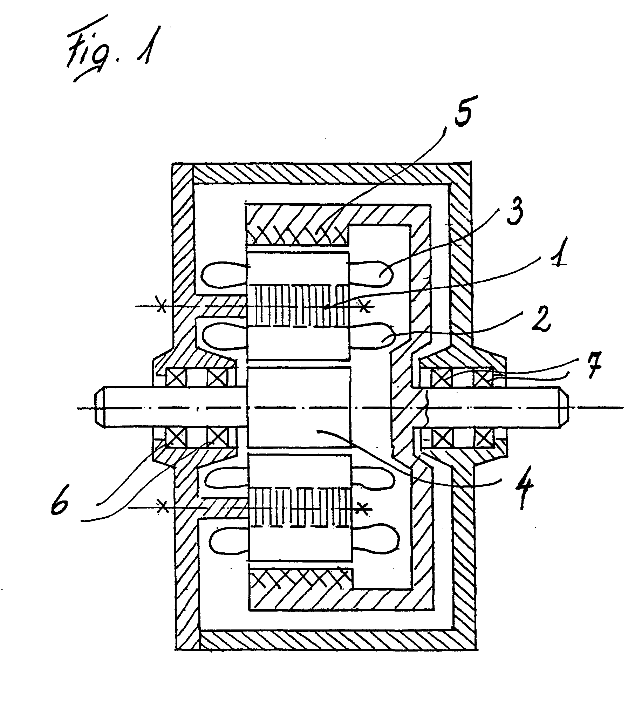

Grundsätzlich sind verschiedene Varianten von Doppelrotor-Maschinen möglich. Gemäß der Fig. 1 ist eine Doppelrotormaschine mit einem Stator 1 der zwei unabhängige Wicklungen 2, 3 aufweist, dargestellt. Bei der zylinderischen Motoranordnung befindet sich eine Wicklung 2 an der Innenseite des Stators 1 bzw. der Statorbohrung und ist als Nut- oder Luftspaltwicklung ausgeführt. Die zweite Wicklung 3 ist an der Außenseite des Stators 1 als Nut- oder Luftspaltwicklung ausgeführt, wobei die Wicklung 2 mit einem als Innenläufer ausgeführten Rotor 4 sowie die Wicklung 3 mit einem als Außenläufer ausgebildeten Rotor 5 zusammenarbeitet. Die Rotoren 4, 5 können mit Permanentmagneterregung, als Käfigläufer, im Reluktanzaufbau, etc, ausgeführt sein. Die beiden Rotoren 4, 5 sind mechanisch über je eine geeignete Lagerung 6, 7 nach dem Stand der Technik gelagert.

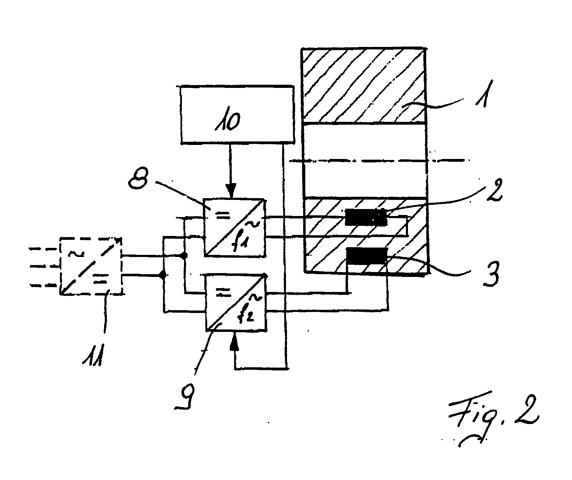

Gemäß der Fig. 2 werden die beiden Wicklungen 2, 3 des Stators 1 von im allgemeinen unterschiedlichen Spannungsquellen gespeist. Die Spannungsquellen sind vorzugsweise Drehstrom-Umrichter 8, 9 mit variabler Frequenz und werden von der elektronischen Steuerung 10 gesteuert. Die Umrichter 8, 9 können vom Ein- oder Mehrphasen-Wechselspannungsnetz über den Eingangsstromrichter 11 oder direkt von einer Gleichspannungsquelle, etwa einer Batterie, versorgt werden. In der Fig. 2 sind symbolisch der Stator 1 und die Wicklungen 2, 3 eingezeichnet.

Der Vorteil der Anordnungen mit zwei unabhängigen Wicklungssystemen ist darin zu sehen, daß die beiden Teilmaschinen völlig unabhängig voneinander gesteuert werden können und sich gegenseitig sehr wenig beeinflussen.

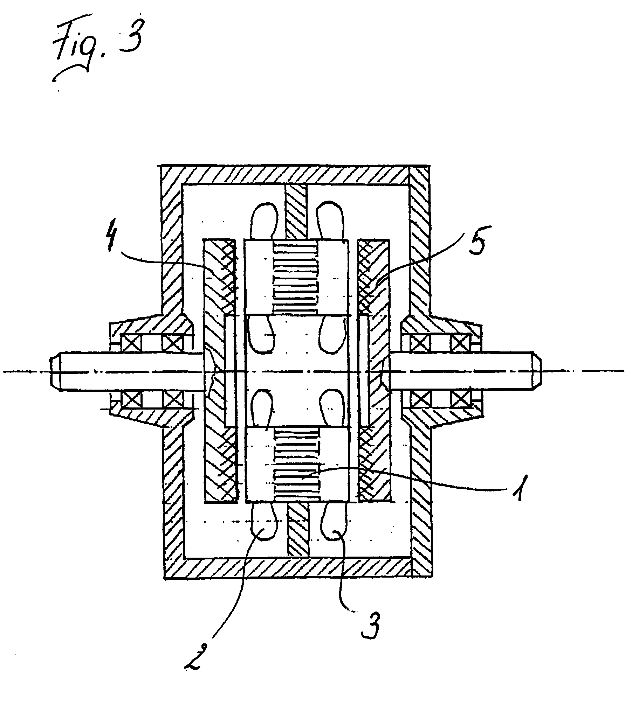

Gemäß der Fig. 3 ist eine Anordnung als Scheibenläufer gezeigt. Dabei befinden sich die zwei Wicklungen 2, 3 als Nut- oder Luftspaltwicklung an der linken und an der rechten Seite des als Scheibentyp aufgebauten Stators 1. Die Rotoren 4, 5 sind entsprechend ebenfalls als Scheibenläufer mit Permanentmagneterregung, Käfigläufer, Reluktanzaufbau, etc. zur linken und zur rechten Seite des Stators 1 angeordnet. Die beiden Wicklungen 2, 3 des Stators 1 werden wiederum von im allgemeinen unterschiedlichen Spannungsquellen entsprechend der Fig. 2 gespeist.

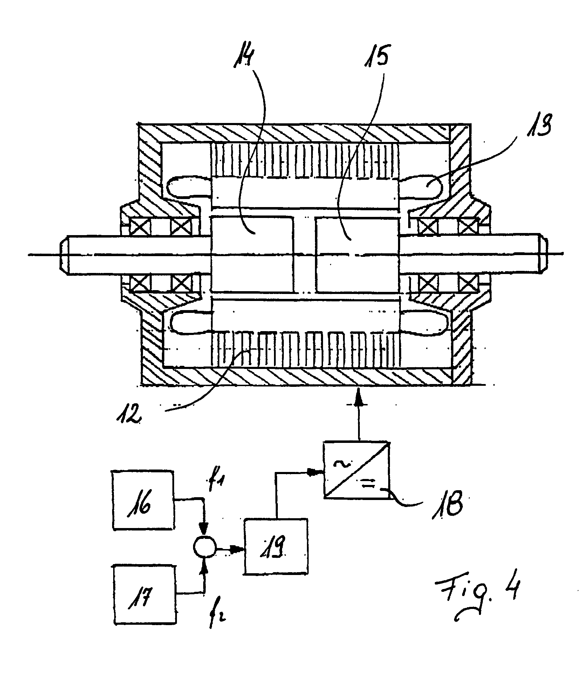

Gemäß der Fig. 4 ist eine Doppelrotormaschine mit einem Stator 12, der nur eine Wicklung 13 aufweist, dargestellt. Die Wicklung 13 wird mit einem Drehstromsystem gespeist, das über die elektrische Ansteuerung zwei Drehfeldkomponenten (über die Frequenzen f1, f2 in Fig. 4 angedeutet) im Drehfrequenzspektrum enthält.

Die beiden Rotoren 14, 15 der Doppelrotormaschine treten selektiv mit frequenzmäßig verschiedenen Drehfeldanteilen f1, f2 des Drehfeldes in Wechselwirkung und laufen daher mit entsprechend im allgemeinen verschiedenen Drehzahlen. Die Selektion der Frequenzen erfolgt beispielsweise durch unterschiedliche Trägheitsmomente, zeitabhängig lösbare Bremsen, oder unterschiedliche Rotortypen. Dabei kann z.B. ein Rotor 14 als Asynchron-Käfigläufer ausgeführt sein, der bei Speisung mit einer entsprechend hohen Frequenz hochläuft, während der zweite Rotor 15 etwa ein von einem Permenantmagnet erregter Rotor ist, der bei Anspeisung mit eben dieser Frequenz im allgemeinen nicht anläuft und nur Pendelmoment entwickelt und anschließend, nachdem der Asynchron-Rotor bereits hochgelaufen ist, durch entsprechende Steuerung, beispielsweise einer feldorientierten Regelung, in seine - zum Asynchron-Rotor 14 unterschiedliche - Drehzahl geführt wird. Es sind auch ähnliche Prinzipien vorstellbar, die verschiedene Drehzahländerungen der beiden Rotoren 14, 15 bei gleicher Anspeisung bewirken. Die beiden Rotoren 14, 15 laufen in einer gemeinsamen Bohrung des Stators 12, beispielsweise alsTrommelläufer bzw. auf der gleichen Seite des Stators 12 als konzentrische Kreis/Kreisring- oder Kreisring/Kreisring-Kombination als Scheibenläufer.

Der Vorteil dieser Anordnung mit einer Wicklung 13 ist darin zu sehen, daß eine Wicklung samt dazugehöriger Anspeisung, vorzugsweise einem Umrichter, eingespart wird und die beiden Frequenzanteile bereits auf der Signalseite durch die zwei Teilmotorsteuerungen bzw. Regelungen 16, 17 überlagert und mit einem gemeinsamen Leistungsteil 18 über die Ansteuerung 19 eingespeist werden. Dieser Vorteil wird durch erhöhte Verluste und Rüttelmomente erkauft, die aber oft gegenüber der Verbilligung des Antriebs in Kauf genommen werden können.

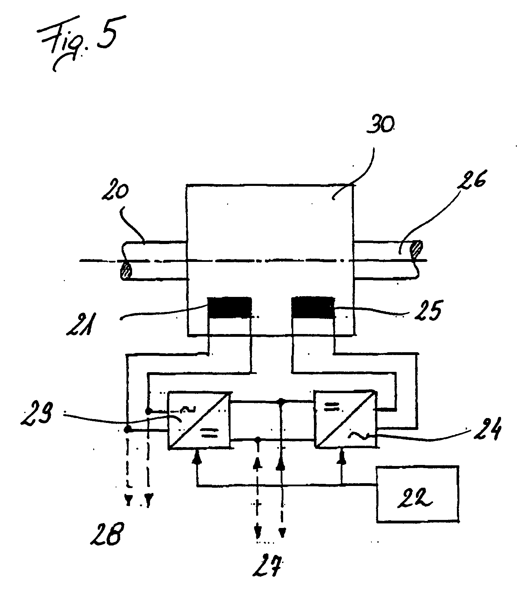

Gemäß der Fig.5 ist ein Getriebe mit variablem Drehzahlverhältnis und optionaler elektrischer Energie Ein- und Auskopplung dargestellt. Die beschriebenen Doppel- oder auch Mehrrotormaschinen können als mechanisches Getriebe mit variabler Übersetzung und optionaler elektrischer Energie-Ein- und Auskopplung geschaltet werden. Dabei wird über den ersten Rotor 20, beispielsweise ausgeführt als Permanentmagnet-erregter Rotor, mechanische Energie der Antriebsmaschine zugeführt, über eine im Stator 30 befindliche Wicklung 21 in elektrische Energie unter Verwendung der Steuerung 22 und des Leistungsteiles 23 umgewandelt und weiter über den Leistungsteil 24 unter Verwendung der Steuerung 22 über die Wicklung 25 und den Rotor 26 wieder in mechanische Energie, wobei der Rotor 26 mit vom Rotor 20 unabhängiger Drehzahl läuft, umgewandelt. Über den elektrischen Zwischenkreis 27 kann optional elektrische Energie ausgetauscht, beispielsweise mit einem Batterie- oder Kondensatorsystem, d.h. abgegeben, beispielsweise zur Versorgung eines elektrischen Netzes, oder aufgenommen, beispielsweise zur erhöhten Leistungsabgabe des Rotors 26 gegenüber dem Rotor 20 oder alternierend, beispielsweise zur Kompensation von Drehmomentrippeln am Rotor 20, ausgetauscht werden. Es ist auch ein elektrischer Energieaustausch an der Stelle 28 möglich, z.B. um über eine Diodenbrücke eine Hilfsenergie zur Versorgung der Steuerung 22 zu schaffen.

Ebenso kann mechanische Energie gleichen Vorzeichens über die Rotoren 20, 26 abgegeben oder aufgenommen werden, wie beispielsweise bei Differentialgetrieben, wo die Rotoren 20, 26 die elektrische Energie aus dem Zwischenkreis 27 mit unabhängigen Drehzahlen bzw. Drehmomenten weitergeben.

Die Ausführung der Doppel- bzw. Multirotormaschine als Getriebe bietet die Möglichkeit einer stufenlosen Drehzahlübersetzung mit einfacher Steuerbarkeit über eine elektrische Zwischenstufe. Weiters stellt sie bei Bedarf eine Kupplungsfunktion zur Verfügung, wobei ausgekuppelt ist, wenn ein Leistungsteil nicht freigegeben wird. Zusätzlich kann aus dem elektrischen Zwischenkreis Leistung entnommen werden, um eine elektrische Energieversorgung zu realisieren. Weiters kann durch elektrische Energiezufuhr vorübergehende oder dauernde erhöhte mechanische Leistung am Getriebeausgang zur Verfügung gestellt werden. Außerdem können Drehmomentschwankungen an einem mechanischen Eingang des Getriebes durch elektrische Energiezu- und -abfuhr kompensiert werden oder auch willkürlich erzeugt werden (Rüttel- oder Losbrechfunktion). Schließlich kann durch vorzugsweise elektrische Energiezufuhr und beidseitige mechanische Energieabfuhr eine Differentialgetriebefunktion realisiert werden.

Abschließend sei festgehalten, daß in den unterschiedlich beschriebenen Ausführungsbeispielen gleiche Teile mit gleichen Bezugszeichen bzw. mit gleichen Bauteilbezeichnungen versehen sind, wobei in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Der Ordnung halber sei abschließend darauf hingewiesen, daß zum besseren Verständnis des Aufbaus der Maschine die Bestandteile teilweise unmaßstäblich und/oder vergrößert und/oder verkleinert dargestellt wurden.

## Patentansprüche

1. Elektrische Maschine in Drehstromausführung, die in einem Gehäuse einen Stator mit mindestens einer Statorwicklung und mindestens zwei, mechanisch voneinander getrennte, Rotoren aufweist, wobei die Rotoren die gleiche Rotationsachse aufweisen und jeder Rotor mit dem elektromagnetisch aktiven Stator in elektromagnetischer Wechselwirkung steht, wobei die Drehzahlen der Rotoren gleich oder unterschiedlich sind, **dadurch gekennzeichnet, daß** die Anspeisung der Statorwicklung mit einer über eine von der Motorsteuerung gesteuerte Superposition aus mindestens zwei frequenzmäßig verschiedenen Drehfeldanteilen, je ein Drehfeldanteil je Rotor, erfolgt.

2. Elektrische Maschine nach Anspruch 1, **dadurch gekennzeichnet, daß** mindestens eine Wicklung (2, 3, 13, 21, 25) des Stators (1, 12, 30) als Nut- oder Luftspaltwicklung ausgeführt ist.

3. Elektrische Maschine nach Anspruch 1 oder 2, **dadurch gekennzeichnet, daß** mindestens ein Rotor (4) als Innenläufer und / oder mindestens ein Rotor (5) als Außenläufer ausgeführt ist.

4. Elektrische Maschine nach mindestens einem der Ansprüche 1 bis 3, **dadurch gekennzeichnet, daß** die Rotoren (4, 5) und der Stator (1) nach dem Prinzip eines Scheibenläufers aufgebaut sind.

5. Elektrische Maschine nach Anspruch 1, **dadurch gekennzeichnet, daß** der Stator (12) eine Wicklung (13) aufweist, wobei diese Wicklung (13) ein magnetisches Feld mit mindestens zwei ausgeprägten Drehfrequenzanteilen (fl, f2) erzeugt, die selektiv mit den Rotoren (14, 15) in elektromagnetische Wechselwirkung treten.

6. Elektrische Maschine nach mindestens einem der Ansprüche 1 bis 5, **dadurch gekennzeichnet, daß** die Wicklungen (2, 3, 13, 21, 25) des Stators (1, 12, 30) über leistungselektronische Stellglieder, wie beispielsweise Transistor-, GTO-Umrichter, Diodengleichrichter o. dgl. die elektrische Energie beziehen oder abgeben.

7. Elektrische Maschine nach mindestens einem der Ansprüche 1 bis 6, **dadurch gekennzeichnet, daß** mindestens zwei Rotoren (20, 26) über mindestens zwei Wicklungen (21,25) und ein leistungselektronisches Stellglied (23, 24) als elektrisches Getriebe verkoppelt sind.

8. Elektrische Maschine nach Anspruch 7, **dadurch gekennzeichnet, daß** über die elektrische Getriebe-Zwischenstufe elektrische Energie mit einem elektrischen System austauschbar ist.

9. Elektrische Maschine nach Anspruch 8, **dadurch gekennzeichnet, daß** die Rotoren (20, 26) als Differentialgetriebe ausgeführt sind.

10. Elektrische Maschine nach mindestens einem der Ansprüche 1 bis 9, **dadurch gekennzeichnet, daß** ein gemeinsames leistungselektronisches Eingangsmodul und eine der Anzahl der Wicklungen entsprechende Anzahl von leistungselektronischen Ausgangsmodulen vorgesehen sind, deren Steuerung von der Motorsteuerung erfolgt.

11. Elektrische Maschine nach mindestens einem der Ansprüche 1 bis 10, **dadurch gekennzeichnet, daß** eine Startprozedur der Rotoren (20, 26) drehzahlmäßig selektiv erfolgt.

## Claims

1. Electric machine of the rotary current type, whereby in a casing a stator is fitted with at least one stator winding and at least two mechanically separate rotors, whereby the rotors have the same axis of rotation, and whereby each rotor has electromagnetic interaction with the electromagnetically active stator, whereby the rotor speeds may be the same or different, **characterised by** the fact that the supply of at least one of the windings is provided by superposition of at least two rotary field components with different frequencies, one for each rotor, controlled by the motor control

2. Electric machine in accordance with Claim 1, **characterised by** the fact that at least one of the windings (2, 3, 13, 21, 25) of the stator (1, 12, 30) is designed as a groove or air-gap winding.

3. Electric machine in accordance with Claim 1 or 2, **characterised by** the fact that at least one rotor (4) is designed as an inner rotor and / or at least one rotor (5) is designed as an outer rotor.

4. Electric machine in accordance with at least one of Claims 1 to 3, **characterised by** the fact that the rotors (4, 5) and the stator (1) are arranged in accordance with the principle of a disc-type rotor.

5. Electric machine in accordance with Claim 1, **characterised by** the fact that the stator (12) has a winding (13), whereby this winding (13) generates a magnetic field with at least two marked rotary frequency components (f1, f2) that have selective electromagnetic interaction with the rotors (14, 15).

6. Electric machine in accordance with at least one of Claims 1 to 5, **characterised by** the fact that electric power is fed to or from the windings (2, 3, 13, 21, 25) of the stator (1, 12, 30) via electronic power modules, such as transistor, GTO inverter, diode rectifier and the like.

7. Electric machine in accordance with at least one of Claims 1 to 6, **characterised by** the fact that at least two rotors (20, 26) are linked via at least two windings (21, 25) and an electronic power module (23, 24) as an electric gear.

8. Electric machine in accordance with Claim 7, **characterised by** the fact that electric power can be exchanged with an electric system via the electric gear intermediate stage.

9. Electric machine in accordance with Claim 8, **characterised by** the fact that the rotors (20, 26) are designed as differential gears.

10. Electric machine in accordance with at least one of Claims I to 9, **characterised by** the fact that a common electronic power input module and a number of electronic power output modules corresponding to the number of windings are provided, which are controlled by the motor control.

11. Electric machine in accordance with at least one of Claims I to 10, **characterised by** the fact that there is a speed-selective start-up procedure for the rotors (20, 26).

## Revendications

1. Machine électrique en exécution courant triphasé, qui présente, dans un carter, un stator doté d'au moins une bobine de stator et d'au moins deux rotors séparés mécaniquement l'un de l'autre, les rotors présentant le même axe de rotation et chaque rotor interagissant de manière électromagnétique avec le stator actif au niveau électromagnétique, les vitesses de rotation des rotors étant similaires ou différentes, **caractérisée en ce que** l'alimentation de la bobine du stator se fait au moyen d'une superposition pilotée par la commande du moteur, composée d'au moins deux parts de champ magnétique rotatif différentes au niveau de la fréquence, une part de champ magnétique rotatif pour chaque rotor.

2. Machine électrique selon revendication 1, **caractérisée en ce qu'**au moins une bobine (2, 3, 13, 21, 25) du stator (1, 12, 30) est exécutée en tant que bobine à induit ou à air.

3. Machine électrique selon revendication 1 ou 2, **caractérisée en ce qu'**au moins un rotor (4) est conçu comme induit intérieur et / ou au moins un rotor (5) est exécuté comme un induit extérieur.

4. Machine électrique selon au moins une des revendications 1 à 3, **caractérisée en ce que** les rotors (4, 5) et le stator (1) sont réalisés selon le principe d'un entrefer plat.

5. Machine électrique selon revendication 1, **caractérisée en ce que** le stator (12) présente une bobine (13), cette bobine (13) générant un champ magnétique avec au moins deux parts de fréquence de rotation caractéristiques (f1, f2), qui interagit sélectivement d'une manière électromagnétique avec les rotors (14, 15).

6. Machine électrique selon au moins une des revendications 1 à 5, **caractérisée en ce que** les bobines (2, 3, 13, 21, 25) du stator (1, 12, 30) prélèvent ou dégagent l'énergie électrique via des composants de réglage électroniques de puissance, comme par exemple des changeurs de fréquence transistorisés ou interruptibles, des redresseurs à diodes ou similaires.

7. Machine électrique selon au moins une des revendications 1 à 6, **caractérisée en ce qu'**au moins deux rotors (20, 26) sont couplés comme transmission électrique via au moins deux bobines (21,25) et un composant de réglage électronique de puissance (23, 24).

8. Machine électrique selon revendication 7, **caractérisée en ce que**, via l'étage intermédiaire de la transmission électrique, l'énergie électrique est échangeable au moyen d'un système électrique.

9. Machine électrique selon revendication 8, **caractérisée en ce que** les rotors (20, 26) sont conçus comme mécanismes différentiels.

10. Machine électrique selon au moins une des revendications 1 à 9, **caractérisée en ce qu'**un module électronique de puissance d'entrée commun et un nombre de modules électroniques de puissance de sortie correspondant au nombre de bobines sont prévus, dont la commande se fait à partir de la commande du moteur.

11. Machine électrique selon au moins une des revendications 1 à 10, **caractérisée en ce qu'**une procédure de démarrage des rotors (20, 26) se fait d'une manière sélective, en fonction de la vitesse de rotation.
